(19) **Europäisches Patentamt European Patent Office Office européen des brevets**

(11) **EP 1 497 370 B1**

(12) **EUROPEAN PATENT SPECIFICATION**

(45) Date of publication and mention of the grant of the patent:
**14.02.2007 Bulletin 2007/07**

(21) Application number: **03732291.4**

(22) Date of filing: **17.04.2003**

(51) Int Cl.:
*C08L 67/02* (2006.01)    *C08L 67/08* (2006.01)
*C08G 63/16* (2006.01)    *C08G 63/48* (2006.01)
*C08K 5/14* (2006.01)

(86) International application number:
**PCT/EP2003/004197**

(87) International publication number:
**WO 2003/089490 (30.10.2003 Gazette 2003/44)**

(54) **BIODEGRADABLE POLYESTERS OBTAINED BY REACTIVE EXTRUSION**

DURCH REAKTIVER EXTRUSION HERGESTELLTE BIOABBAUBARE POLYESTER

POLYESTERS BIODEGRADABLES OBTENUS PAR EXTRUSION REACTIVE

(84) Designated Contracting States:
**AT BE BG CH CY CZ DE DK EE ES FI FR GB GR HU IE IT LI LU MC NL PT RO SE SI SK TR**

(30) Priority: **22.04.2002 IT MI20020865**

(43) Date of publication of application:
**19.01.2005 Bulletin 2005/03**

(73) Proprietor: **NOVAMONT S.p.A.**
**28100 Novara (IT)**

(72) Inventors:
• **BASTIOLI, Catia**
  **I-28100 Novara (IT)**
• **CELLA, Giandomenico**
  **I-28100 Novara (IT)**
• **DELTREDICI, Gianfranco**
  **I-21018 Sesto Calende (IT)**
• **MILIZIA, Tiziana**
  **I-28100 Novara (IT)**

(74) Representative: **Zanoli, Enrico et al**
**Zanoli & Giavarini S.r.l.**
**Via Melchiorre Gioia, 64**
**20125 Milano (IT)**

(56) References cited:
**EP-A- 0 569 148**    **DE-A- 10 063 646**
**US-A- 5 500 465**

**Description**

The present invention relates to a composition of one or more biodegradable aliphatic and/or aliphatic-aromatic thermoplastic polyesters obtained by reactive extrusion of the polyesters with organic peroxides.

One of the main problems associated to the use of biodegradable polyesters in the production of articles is the difficulty of obtaining polymers with molecular weights high enough to be used with the various known transformation technologies (such as for instance film blowing). Compatibility of biodegradable polyesters with other polymers is also a problem.

Organic peroxides are chemical specialties used in the polymer field especially as initiators for the polymerization or copolymerization of vinyl monomers (for instance, PVC, LDPE, polystyrene), as reinforcement agents for elastomers and resins as well as cross-linking agents for ethylene/propylene and synthetic rubbers or silicones.

In the sector of biodegradable polymers, EP-0 989 159 (JSP Corporation) discloses the use of organic peroxides as cross-linking agents of non-cross-linked aliphatic polyesters to obtain resins with a high gel fraction that allow the production of foams having improved properties. In particular, peroxides are added to beads of non cross-linked aliphatic polyesters after their production to obtain cross-linked resin beads that are subsequently expanded.

EP-0 737 219 (Neste Oy) discloses instead the use of organic peroxides as stabilizers of polyhydroxy acids (namely polylactic acid and polycaprolactone) in order to reduce the scission of polymer chains (i.e. their molecular weight reduction) during polymer processing.

US 5,500,465 discloses the use of peroxides as cross-linking initiators for biodegradable aliphatic polyesters or copolyesters of the polyhydroxy acid type, used in blend with starch or polysaccharide compounds. This patent relates in particular to blends containing only natural starches dried to a water content of less than 1% (wt) and mixed with a biodegradable polyester in the presence of a plasticizer other than water.

JP 10-305471 discloses the manufacture of an aliphatic polyester resin foam by reactive extrusion of aliphatic polyesters and an organic peroxide at a temperature near the melting point of the resin. The gel fraction is substantially 0%.

The prior art does not disclose biodegradable polyesters of the dicarboxyliclic acid/diol type extrusion-upgraded with organic peroxides with the aim of rendering them more suitable for film processing without significant increase of cross-linking phenomena.

On the contrary, according to the present invention, the increase of the molecular weight occurs without significant cross-linking phenomena which would lead to gel formation rendering the polyesters unsuitable for various processing types, such as for instance film blowing.

The present invention relates to a composition of one or more biodegradable thermoplastic aliphatic and/or aliphatic-aromatic polyesters, of the dicarboxyliclic acid/diol type, obtained by reactive extrusion of polyesters with organic peroxides, said composition having a gel fraction lower than 4,5% (w/w) with respect to the polyester, said gel fraction being determined on a sample of about 4 g ($X^1$) placed in a container with 200 ml of chloroform, then reflux-heated for 8 hours and vacuum filtered with a filtering means having a 600 mesh sieve, the material remaining on the filtering means being oven-dried at about 50°C for 8 hours under reduced pressure, the weight of the obtained material being ($X^2$) and the gel fraction being ($X^2$) /($X^1$), wherein the starting monomers also comprise an unsaturated acid of natural or synthetic origin, or an ester thereof, in an amount within the range of 0,1 to 20% by moles with respect to the total content of the acids in the composition.

The present invention relates also to a process of producing a composition of one or more biodegradable aliphatic and/or aliphatic-aromatic thermoplastic polyesters of the dicarboxylic acid/diol type, by reactive extrusion of the polyesters with organic peroxides at reaction temperatures at least 20°C higher than the melting temperature of the polyesters, and such that the half lives $T_{dim}$ of the peroxide are less than 10 minutes, wherein said composition has a gel fraction lower than 4.5% w/w.

According to this invention it was surprisingly found that biodegradable thermoplastic polyesters, of the dicarboxylic acid/diol type, with high molecular weight can be obtained by addition of organic peroxides during their extrusion process. The increase in the molecular weight of biodegradable polyesters can be easily assessed by observing the increase in viscosity values following the processing of polyesters with peroxides.

In particular, in the composition according to the invention, the polyester is obtained through a reactive extrusion reaction at reaction temperatures higher by at least 20°C than the melting temperature of the polyester, and such that the half lives $T_{dim}$ of the peroxide are of less than 10 minutes.

The inherent viscosity of the polyester before the reactive extrusion is comprised between 0,5 - 1,5 dl/g, preferably 0,8 - 1,4 dl/g, whereas the inherent viscosity of the polyester after the reactive extrusion is comprised between 0,7 - 1,7 dl/g, preferably 0,9 - 1,5 dl/g.

Examples of dicarboxylic acids include oxalic acid, malonic acid, succinic acid, glutaric acid, adipic acid, pimelic acid, suberic acid, azelaic acid, sebacic acid, undecandioic acid, dodecandioic acid and brassylic acid.

Examples of diols include 1,2-ethandiol, 1,2-propandiol, 1,3-propandiol, 1,4-butandiol, 1,5-pentandiol, 1,6-hexandiol, 1,7-heptandiol, 1,8-octandiol, 1,9-nonandiol, 1,10-decandiol, 1,11-undecandiol, 1,12-dodecandiol, 1,13-tridecandiol, 1,4-cyclohexandimetbanol, neopentylglycol, 2-methyl-1,3-propandiol, dianhydrosorbitol, dianhydromannitol, dianhydroiditol, cyclohexandiol, cyclohexanmethandiol.

In addition to the dicarboxylic acid and the diol, the biodegradable polyester according to the invention may advantageously comprise as a starting monomer also a natural or synthetic unsaturated acid. Its content is within the range of 0,1 to 20%, preferably 0,2 to 10%, and more preferably 0,3 to 7% in moles with respect to the total content of the acids in the composition.

Examples of unsaturated acids of synthetic origin are maleic acid, fumaric acid, vinyl acetate, acrylic acids, methacrylic acids, hydroxyalkylacrylates and hydroxyalkylmethacrylates.

Examples of unsaturated acids of natural origin are monounsaturated hydroxyacids, such as ricinoleic acid and lesquerolic acid, mono-, or polyunsaturated monocarboxylic acids, such as oleic, erucic, linoleic, linolenic and itaconic acid. The unsaturated acids of natural origin may be used either in the pure form or mixed with other fatty acids either saturated or unsaturated. In particular they may be used as blends obtained from saponification or transesterification of the vegetable oils which they originate from. For instance, ricinoleic acid, in the form of methylricinoleate, may be used in a more or less pure form obtained through a transesterification reaction of castor oil with methanol, and subsequent removal of glycerin (a byproduct of the reaction) and excess methanol.

Advantageously, the biodegradable polyester according to the invention may be functionalized in particular by grafting molecules with unsaturated moieties.

Advantageously, the biodegradable polyester according to the invention may contain as a starting monomer also up to 50% moles - based on the content of dicarboxylic acid and other possible acids included in the chain - of a polyfunctional aromatic compound, such as phthalic acids, in particular terephthalic acid, bisphenol A, hydroquinone, and the like.

The polyester according to the invention may include, in addition to the base monomers, at least a hydroxy acid in an amount in the range from 0 to 49%, preferably 0 to 30% moles based on the moles of the aliphatic dicarboxylic acid. Examples of suitable hydroxy acids are glycolic acid, hydroxybutyric acid, hydroxycaproic acid, hydroxyvaleric acid, 7-hydroxyheptanoic acid, 8-hydroxycaproic acid, 9-hydroxynonanoic acid and lactic acid.

In order to obtain branched products, in the preparation process of the copolyester according to the invention, one or more polyfunctional molecules may be advantageously be added in an amount from 0.1 to 3% moles based on the amount of dicarboxylic acid and unsaturated acid of natural origin (as well as of the possible hydroxy acids and phthalic acids). Examples of these molecules include glycerol, pentaerythritol, trimethylolpropane, citric acid, densipolic acid, auripolic acid, epoxydized soybean oil and castor oil.

Besides, the copolymer according to the invention may be obtained or used in blend with polyesters the same type, both random and block, polyesters - or with other polyesters, even of the polyhydroxyacid type, (also obtained by fermentation) or synthesized polymers other than polyesters, such as, for instance, polyamides, polycarbonates, polyolefins, polyurethanes; it may also be obtained or used in blend with polymers of natural origin such as starch, cellulose, chitosan, alginates or natural rubber. In such case the peroxide may compatibilize the different polymers in the blend leading to the formation of bonds between the different polymers chains.

In case of blend with starch, the mixing of the components should take place in the presence of water, and the latter may be the water naturally contained in the starch or also water added to act as a plasticizer of the starch composition. Starches and celluloses may be modified and among them, it is possible to mention, for instance, starch or cellulose esters with a substitution degree within the range of 0.2 to 2.5, hydroxypropylated starches, and starches modified with fatty chains. Starch may also be used either in the destructurized or the gelatinized form.

Organic peroxides used in the production of biodegradable polyesters according to the invention include diacyl peroxides, peroxyesters, dialkyl peroxides, hydroxyperoxides, peroxy ketals and peroxy dicarbonates. Diacyl peroxides and dialkyl peroxides are preferred. Examples of such peroxides include, for instance, benzoyl peroxide, lauroyl peroxide, isononanoyl peroxide, dicumyl peroxide, di-(tert-butilperoxyisopropyl)benzene, tert-butyl peroxyde, 2,5-dimethyl-2,5-di-(tert-butyl)peroxy hexane.

Organic peroxides are added in an amount ranging from 0,02 to 1,5 wt %, preferably from 0,03 to 1,0 wt %, and more preferably from 0,04 to 0,6 wt % based on the amount of polyester (plus the other polymers in case of blend). Particularly for films and sheets the preferred range is 0,02 - 0,7 wt%, preferably 0,03 - 0,5 wt% whereas for foamed products the preferred range is 0,1 - 1,5 wt%, preferably 0,2 - 1,0 wt%.

The skilled person will be able to easily identify the actual amount of peroxide necessary with respect to the nature of the polymer, so as to obtain the polymer with the gel percentage according to the invention. For instance, in case of polymers modified through the introduction of chain unsaturation, it is convenient to operate with lower amount of peroxides with respect to the amount necessary for the same type of saturated polyesters.

Organic peroxides are, as known, characterized in that they have a limited stability to heating: they are likely to decompose at more or less high temperatures, and often in a violent and explosive manner. An important characteristic to know the behavior of organic peroxides is therefore their half lives $T_{dim}$, i.e. the time within which, at a given temperature $t$, half of the peroxide is reacted. The dependence of the half life $T_{dim}$ from temperature $t$ is of an exponential type:

$$\mathrm{T}_{dim} = a\ e^{-bt} \text{ (with } a \text{ and } b = constants)$$

this means that, for a given peroxide, the higher the temperature, the lower the $\mathrm{T}_{dim}$.

In the composition according to the present invention, the polyester is obtained through a reactive extrusion reaction at reaction temperatures at least 20° C higher than the melting temperature of the polyester and such that the half lives $\mathrm{T}_{dim}$ of the peroxide are of less that 10 minutes, preferably less than 5 minutes and more preferably less than 3 minutes.

In the composition according to the present invention, the polyester is obtained with a gel fraction lower than 4,5% (w/w) with respect to the polyester, preferably lower than 3% and still more preferably lower than 1%.

The gel fraction according to the present invention is defined by placing a sample of polyester ($X^1$) in chloroform under reflux for 8 hours, filtering the mixture on a sieve and weighing the weight of the material that remains on the filtering grid ($X^2$). The gel fraction was determined as the ratio of the material so obtained with respect to the weight of the sample ($X^2/X^1$) x 100.

The polyesters according to the invention are suitable to be used - by suitably modulating the relevant molecular weight - in many practical applications such as films, injection molding and extrusion coating products, fibers, foams, thermo-molded products, etc. In particular, the polyesters according to the invention are suitable for the production of:

- films, either mono- or bidirectional, and multi-layer films with other polymeric materials;
- films for agriculture such as mulching films;
- bags and liners for organic waste collection;
- mono- or multi-layer food packaging, such as for instance containers for milk, yogurt, meat, drinks, etc;
- coatings obtained with the extrusion coating technique;
- multi-layer laminates with layers from paper, plastics, aluminum, metalized films;
- expanded and half-expanded products, including expanded blocks obtained from pre-expanded particles;
- expanded sheets, thermoformed sheets and containers obtained therefrom for food packaging;
- containers in general for fruits and vegetables;
- composites with gelatinized, destructurized and/or complexed starch or with natural starch for use as filler;
- fibers, fabrics and non-woven fabrics for the sanitary and hygiene sector.

Some non-limiting examples of the polyester according to the invention will follow.

EXAMPLES

EXAMPLE 1

By polycondensation of sebacic acid and butanediol (molar ratio diol/dicarboxylic acid = 1.05) and in the presence of isopropoxy A1 the catalyst, a linear polybutylene sebacate was obtained. The polybutylene sebacate production process was carried out according to the teaching of patent WO 00/55236.

The polymer was synthesized in a 25 1 steel reactor, provided with mechanical stirrer, an inlet for nitrogen flow, a condenser and a connection with a vacuum pump, starting from

- 6000 g sebacic acid (29,7 moles),
- 2807 g butane diol (31,2 moles),
- 6 g isopropoxy Al (corresponding to $3,0\ 10^{-2}$ moles).

The temperature was gradually increased to 210°C under vigorous agitation and nitrogen flow. The reaction was continued until 90% of the theoretical amount of light byproducts was distilled. The temperature was then increased to 240°C and the system was set at a pressure of 0,6 mmHg. The reaction was carried on for 120 min. 7 kg of a polymer having an inherent viscosity 0,85 dl/g (0,2 g/dl solution in $CHCl_3$ at 25°C), a MFR (150°C; 2.16 kg) of 44 g/10 min and $T_m = 65$°C was obtained.

1 kg of the so obtained polymer was reacted with 4 g (0,4 pph) of 2,5-dimetyl-2,5-di(tert-butyl)peroxyhexane (Luperox 101) in a twin-screw extruder Haake Rheocord 90 with an extrusion equipment Theomex TW-100 whose main characteristics are:

- Barrel: length 395 mm, diameter 20-32 mm
- Feeding: forced cooling at 23°C

- Screws (intensive mix): conic, contrarotating, diameter 20-31 mm, length 331 mm
- Head: length 80 mm, diameter 20 mm; nozzle: diameter 3 mm.

The process was carried out under the following conditions:

- temperature profile; 23-90-170-170-170°C
- rotation speed of screw: 200 rpm; throughput: 1 kg/h.

The temperature profile shows that the temperature in the 1st zone of the extruder (feeding zone) is lower than $T_m$ of the polyester, and that in the following zone, while being higher, it is such that $T_{dim}$ of the peroxide is higher than 10 min. This has the purpose of reaching working temperatures with a $T_{dim}$ of the peroxide of less than 10 minutes only after a suitable mixing of the reactants.

The resulting product has inherent viscosity of 1,23 dl/g (in solution, 0,2 g/dl of $CHCl_3$ at 25°C,) MFR (150°C; 2.16 kg) of 1.4 g/10 min and melting point $T_m$ = 64° C.

The half life $T_{dim}$ of 2,5-dimetyl-2,5-di(tert-butyl)peroxyhexane at 170°C was of about 2,5 min. The $T_{dim}$ was calculated on the basis of the data supplied by the peroxide producer (see Table I).

The product was then analyzed to determine the amount of gels. In particular, a sample of about 4 g ($X^1$) was placed in a container with 200 ml chloroform. The mix was then reflux-heated for 8 hours and vacuum-filtered with a filtering means having a 600 mesh sieve. The material that remained on the filtering net after the filtration treatment was then oven-dried at about 50°C for 8 hours under reduced pressure. The weight of the thus obtained material ($X^2$) has been determined. The gel fraction was determined as the ratio between the thus obtained material and the sample weight ($X^2$)/($X^1$) = 0.5%.

EXAMPLE 2

The upgrading is carried out with linear polybutylene sebacate-co-ricinoleate obtained by polycondensation. The synthesis of the polymer was according to the process described in Example 1 with:

- 6000 g sebacic acid (29,7 moles)
- 2940 g butane diol (32,7 moles)
- 489.4 g methyl ricinoleate (1,6 moles)
- 9 g of monobutylstannoic acid (4,3·$10^{-2}$ moles)

The temperature was gradually increased to 210°C under vigorous agitation and nitrogen flow. The reaction was continued until 98% of the theoretical amount of light byproducts was distilled. The temperature was then increased to 240°C and the system was set at a pressure of 1 mmHg. The reaction was carried on for 120 min. 7 kg of a polymer having an inherent viscosity of 0,92 dl/g and $T_m$ = 62°C were obtained.

1 kg of polymer was reacted with 1 g (0,1 pph) of 2,5-dimetyl-2,5-di(tert-butyl) peroxyhexane (Luperox 101) in a Haake Rheocord extruder with the following conditions:

- temperature profile; 23-90-170-170-170°C
- screw rotation speed: 200 rpm; throughput: 1 kg/h.

A product with inherent viscosity of 1.26 dl/g is obtained having a gel fraction, determined as in example 1, of 0.22%.

EXAMPLE 3

The upgrading is carried out on polybutylene sebacate-co-ricinoleate, branched with a trifunctional monomer, obtained by polycondensation. The synthesis of the polymer was realized according to the process described in Example 1 with:

- 6000 g sebacic acid (29,7 moles)
- 2940 g butane diol (32,7 moles)
- 1384 g methyl ricinoleate (4,43 moles)
- 25.1 g glycerol (0.27 moles)
- 9 g of monobutylstannoic acid (Fascat 4100 - corresponding to 4,3·$10^{-2}$ moles).

The temperature was gradually increased to 210°C under vigorous agitation and nitrogen flow. The reaction was carried on until 95% of the theoretical amount of light byproducts was distilled. The temperature was then increased to 240°C and a pressure of 0,6 mmHg was applied to the system. The reaction was continued for 300 min. 7 kg of a polymer having an inherent viscosity of 1,15 dl/g were obtained.

1 kg of polymer was reacted with 2 g (0,2 pph) of dibenzoyl peroxide (Aldrich) in a Haake Rheocord extruder in the following conditions:

- temperature profile: 100-150-150-150°C
- screw rotation speed: 150 rpm; throughput: 3 kg/h
- A product is obtained having inherent viscosity of 1,35 dl/g and a gel fraction = 0.5%.

EXAMPLE 4

- 6000 g sebacic acid (29,7 moles);
- 2940 g butane diol (32,7 moles);
- 9 g Fascat 4100 ($4,3 \cdot 10^{-2}$ moles)

were reacted in the reactor of Example 1.

The temperature was gradually increased to 210°C uner vigorous agitation and nitrogen flow. The reaction was continued until 95% of the theoretical amount of light byproducts (780 ml) was distilled. The temperature was then increased to 240°C and the system was set at a pressure of 1,0 mmHg. The reaction was continued for 120 min.. 7 kg of a polybutylene sebacate having inherent viscosity of 0,84 dl/g were obtained. The polymer was then filmed in a Haake Rheocord.

In the reactor of Example 1:

- 5050 g sebacic acid (25.0 moles);
- 2700 g neopentyl glycole (26.0 moles);
- 8 g Fascat 4100 ($3.8 \cdot 10^{-2}$ moles)

were then added.

The temperature was gradually increased to 210°C under vigorous agitation and nitrogen flow. The reaction was continued until 87% of the theoretical amount of light byproducts (780 ml) was distilled. The temperature was then increased to 240°C and the system was set at a pressure of 0,2 mmHg. The reaction was continued for 200 minutes. The product (polyneopentylensebacate) is an amorphous polymer at room temperature, showing no melting peak with DSC, and with an inherent viscosity of 0,87 dl/g. Being amorphous, the product cannot be filmed.

240 g polybutylene sebacate and 160 g polyneopentylensebacate obtained as described above were reacted in an extruder with 1,2 g (0,3 pph) 2,5-dimetyl-2,5-di(tert-butyl)peroxyhexane (Luperox 101-Atofina) in the following conditions:

- temperature profile: 23, 90, 170, 170, 170°C
- screw rotation speed: 200 rpm; throughput: 1,2 kg/h.

A polymer is obtained having a viscosity of 1,29 dl/g and a gel fraction = 0.12%. The Haake filmed product provides the following results:

|  | Longitudinal Direction (N/mm) | Transversal Direction (N/mm) |
|---|---|---|
| Polybutylene sebacate | 3 | 20 |
| Example 4 | 10 | 30 |

EXAMPLE 5

- 700 g of the polymer of Example 2,
- 300 g natural rubber CV 60,
- 3 g 2,5-dimetyl-2,5-di(tert-butyl)peroxy hexane (Luperox 101 - Atofina) (0,3 pph)
- temperature profile: 23-100-100-100-100°C
- screw rotation speed: 200 rpm; throughput: 1 kg/h

were extruded in a Haake Rheocord extruder.

The thus obtained product was then reacted in an extruder at a higher temperature:

- temperature profile: 23-90-170-170-170°C
- screw rotation speed: 200 rpm; throughput: 1 kg/h.

A film produced in a Hake Rheocord extruder is obtained. The Elmendorf tearing resistance of the film compared with that of the film of the polymer according to Example 2 is shown in the table. The values show that a significant improvement in the tearing resistance in the longitudinal direction and a balancing of this property in both directions was obtained.

|  | Long. Direction (N/mm) | Transv. Direction (N/mm) |
|---|---|---|
| Ex. 2 | 5 | 23 |
| Ex. 5 | 16 | 25 |

Table 1

| Half lives $T_{dim}$ of the peroxides used | | | | |
|---|---|---|---|---|
|  | $T_{dim}$ | 10 h | 1 h | 1 min |
| 1 | 2,5-dimethyl-2.5-di(tert-butyl)peroxy hexane | 119 | 138 | 177 |
| 2 | Di(tert-butylperoxy-isopropyl)benzene | 121 | 142 | 185 |
| 3 | Lauroyl peroxide | 62 | 80 | 120 |
| 4 | Benzoyl peroxide | 73 | 92 | 131 |
| $T_{dim}$ of 10 min correspond to the following temperatures: (1) 157°C; (2) 161°C; (3) 98°C; (4) 111 °C | | | | |

**Claims**

1. A composition of one or more biodegradable aliphatic and/or aliphatic-aromatic thermoplastic polyesters of the dicarboxylic acid/diol type, obtained by reactive extrusion of the polyesters with organic peroxides, said composition having a gel fraction lower than 4,5% (w/w) with respect to the polyester, said gel fraction being determined on a sample of about 4 g ($X^1$) placed in a container with 200 ml of chloroform, then reflux-heated for 8 hours and vacuum filtered with a filtering means having a 600 mesh sieve, the material remaining on the filtering means being oven-dried at about 50°C for 8 hours under reduced pressure, the weight of the obtained material being ($X^2$) and the gel fraction being ($X^2$) /($X^1$), wherein the starting monomers also comprise an unsaturated acid of natural or synthetic origin, or an ester thereof, in an amount within the range of 0,1 to 20% by moles with respect to the total content of the acids in the composition.

2. The composition according to claim 1, wherein said unsaturated acid of natural or synthetic origin, or an ester thereof, is present in an amount within the range of 0,2 to 10%, preferably 0,3 to 7% by moles with respect to the total content of the acids in the composition.

3. The composition according to claim 1 or 2, **characterized by** a gel fraction of less than 3%.

4. The composition according to claim 3, **characterized by** a gel fraction of less than 1%.

5. The composition according to claim 1 or 2, wherein the polyester is obtained by reactive extrusion at reaction temperatures at least 20°C higher than the polyester melting temperature and such that the half lives $T_{dim}$ of the peroxide are less than 10 minutes, preferably less than 5 minutes and more preferably less that 3 minutes.

6. The composition according to claim 1 or 2, wherein the dicarboxylic acid is selected from the group comprising oxalic acid, malonic acid, succinic acid, glutaric acid, adipic acid, pimelic acid, suberic acid, azelaic acid, sebacic acid, undecandioic acid, dodecandioic acid and brassylic acid.

7. The composition according to claim 6, wherein the diol is selected from the group comprising 1,2-ethandiol, 1,2-propandiol, 1,3-propandiol, 1,4-butandiol, 1,5-pentandiol, 1,6-hexandiol, 1,7-heptandiol, 1,8-octandiol, 1,9-nonandiol, 1,10-decandiol, 1,11-undecandiol, 1,12-dodecandiol, 1,13-tridecandiol, 1,4-cyclohexandimethanol, neopentylglycol, 2-methyl-1,3-propandiol, dianhydrosorbitol, dianhydromannitol, dianhydroiditol, cyclohexandiol, cyclohexanmethandiol.

8. The biodegradable composition according to any previous claim wherein the starting monomer further comprises up to 50% moles, based on the total amount of dicarboxylic acid/diol, of a polyfunctional aromatic compound.

9. The composition according to any previous claim comprising one or more polyfunctional molecules in amounts within the range of 0.1 to 3% moles based on dicarboxylic acid, said molecules being selected from glycerol, pentaerythritol, trimethylolpropane, citric acid, densipolic acid, auripolic acid, epoxydized soybean oil and castor oil.

10. The composition according to any previous claim comprising at least one hydroxy acid in an amount within the range of 0 to 49%, preferably 0 to 30%, moles based on the moles of dicarboxylic acid, said hydroxy acid being selected from the group comprising glycolic acid, hydroxybutyric acid, hydroxycaproic acid, hydroxyvaleric acid, 7-hydroxyheptanoic acid, 8-hydroxycaproic acid, 9-hydroxynonanoic acid and lactic acid.

11. The composition according to any previous claim in a blend with polyesters of the same type, random or block, or with other polyesters, even of the polyhydroxyacid type (also obtained by fermentation), or with synthetic polymers other than the polyesters, or with polymers of natural origin selected from the group comprising starch, cellulose, chitosan, alginates an natural rubber.

12. The composition according to the previous claim, wherein starch and cellulose are modified and/or starch is present in a destructurized o gelatinized form.

13. The composition according to the previous claim, wherein mixing with starch takes place in the presence of water, naturally contained in starch or added as a plasticizer of the starch composition.

14. The composition according to any previous claim, wherein the organic peroxides are selected from the group comprising diacyl peroxides, peroxy esters, dialkyl peroxides, hydroxyperoxides, peroxy ketals and peroxy dicarbonates.

15. The composition according to claim 14, wherein diacyl peroxides and dialkyl peroxides are selected from the group comprising benzoyl peroxide, lauroyl peroxide, isonanoyl peroxide, dicumyl peroxide, di-(tert-butylperoxyisopropyl) benzene, tert-butylperoxide, 2,5-dimetyl-2,5-di(tert-butyl)peroxyhexane.

16. A process of producing a composition of one or more biodegradable aliphatic and/or aliphatic-aromatic thermoplastic polyesters of the dicarboxylic acid/diol type, by reactive extrusion of the polyesters with organic peroxides at reaction temperatures at least 20°C higher than the melting temperature of the polyesters, and such that the half lives $T_{dim}$ of the peroxide are less than 10 minutes, wherein said composition has a gel fraction lower than 4.5% w/w.

17. Process according to claim 16, wherein said half lives $T_{dim}$ of the peroxide are less than 5 minutes, preferably less that 3 minutes.

18. Process according to claim 16 or 17, wherein said composition has a gel fraction lower than 3%, preferably lower than 1%.

19. Process according to claim 16, wherein the dicarboxylic acid is selected from the group comprising oxalic acid, malonic acid, succinic acid, glutaric acid, adipic acid, pimelic acid, suberic acid, azelaic acid, sebacic acid, undecandioic acid, dodecandioic acid and brassylic acid.

20. Process according to claim 16, wherein the diol is selected from the group comprising 1,2-ethandiol, 1,2-propandiol, 1,3-propandiol, 1,4-butandiol, 1,5-pentandiol, 1,6-hexandiol, 1,7-heptandiol, 1,8-octandiol, 1,9-nonandiol, 1,10-decandiol, 1,11-undecandiol, 1,12-dodecandiol, 1,13-tridecandiol, 1,4-cyclohexandimethanol, neopentylglycol, 2-methyl-1,3-propandiol, dianhydrosorbitol, dianhydromannitol, dianhydroiditol, cyclohexandiol, cyclohexanmethandiol.

21. Process according to claim 16, wherein the starting monomers further comprise up to 50% by moles, based on the total amount of dicarboxylic acid/diol, of a polyfunctional aromatic compound.

22. Process according to claim 16, comprising one or more polyfunctional molecules in amounts within the range of 0.1 to 3% by moles based on dicarboxylic acid, said molecules being selected from glycerol, pentaerythritol, trimethylolpropane, citric acid, densipolic acid, auripolic acid, epoxydized soybean oil and castor oil.

23. Process according to claim 16, comprising at least one hydroxy acid in an amount within the range of 0 to 49%, preferably 0 to 30%, moles based on the moles of dicarboxylic acid, said hydroxy acid being selected from the group comprising glycolic acid, hydroxybutyric acid, hydroxycaproic acid, hydroxyvaleric acid, 7-hydroxyheptanoic acid, 8-hydroxycaproic acid, 9-hydroxynonanoic acid and lactic acid.

24. Process according to claim 16, wherein said composition is in a blend with polyesters of the same type, random or block, or with other polyesters, even of the polyhydroxyacid type (also obtained by fermentation), or with synthetic polymers other than the polyesters, or with polymers of natural origin selected from the group comprising starch, cellulose, chitosan, alginates an natural rubber.

25. Process according to claim 24, wherein starch and cellulose are modified and/or starch is present in a destructurized o gelatinized form.

26. Process according to the previous claim, wherein mixing with starch takes place in the presence of water, naturally contained in starch or added as a plasticizer of the starch composition.

27. Process according to claim 16, wherein the organic peroxides are selected from the group comprising diacyl peroxides, peroxy esters, dialkyl peroxides, hydroxyperoxides, peroxy ketals and peroxy dicarbonates.

28. Process according to claim 27, wherein diacyl peroxides and dialkyl peroxides are selected from the group comprising benzoyl peroxide, lauroyl peroxide, isonanoyl peroxide, dicumyl peroxide, di-(tert-butylperoxyisopropyl)benzene, tert-butylperoxide, 2,5-dimetyl-2,5-di(tert-butyl)peroxyhexane.

29. Use of the composition of one or more biodegradable aliphatic and/or aliphatic-aromatic thermoplastic polyesters according to any previous claim for the production of:

- films, either mono- or bidirectional, and multi-layer films with other polymeric materials;
- films for agriculture such as mulching films;
- bags and liners for organic waste collection;
- mono- or multi-layer food packaging, such as for instance containers for milk, yogurt, meat, drinks, etc;
- coatings obtained with the extrusion coating technique;
- multi-layer laminates with layers from paper, plastics, aluminum, metalized films;
- expanded and half-expanded products, including expanded blocks from pre-expanded particles;
- expanded sheets, thermoformed sheets and containers obtained therefrom for food packaging;
- containers in general for fruits and vegetables;
- composites with gelatinized, destructurized and/or complexed starch or natural starch for use as filler;
- fibers, fabrics and non-woven fabrics for the sanitary and hygiene sector.

30. Shaped articles obtainable from the compositions of any previous claim.

31. Shaped articles according to claim 30, wherein said articles are selected from monodirectional films, bidirectional films, multi-layer films with other polymeric materials, mulching films, coatings obtained from extrusion coating technique.

32. Shaped articles according to claim 30, wherein said articles are selected from bags or liners for organic waste collection.

33. Shaped articles according to claim 30, wherein said articles are mono or multi-layer food containers selected from milk containers, yogurt containers, meat containers, drinks containers, fruit containers, vegetables containers.

34. Shaped articles according to claim 30, wherein said articles are multi-layer laminates comprising a layer of material selected from paper, plastics, aluminum, metallized film.

35. Shaped articles according to claim 30, wherein said articles are selected from expanded products, half-expanded products, expanded blocks from pre-expanded particles, expanded sheets, thermoformed sheets, containers for food packaging made of expanded sheets or thermoformed sheets.

36. Shaped articles according to claim 30, wherein said articles are selected from composites with gelatinized, destructured and/or complexed starch or natural starch as filler.

37. Shaped articles according to claim 30, wherein said articles are selected from fibers, fabrics, nonwoven fabrics for the sanitary or hygiene sector.

38. Films or sheets obtained from the composition according to claim 1 or the composition obtained from claim 16, **characterized in that** said organic peroxides are added to the reactive extrusion in an amount of from 0.02 to 0.7 % wt based on the amount of polyester or polymer blend.

39. Films or sheets according to claim 38 **characterized in that** said amount of organic peroxides is 0.03 - 0.5 % wt.

40. Foamed products obtained from the composition according to claim 1 or the composition obtained from claim 16, **characterized in that** said organic peroxides are added to the reactive extrusion in an amount of from 0.1 to 1.5 % wt based on the amount of polyester or polymer blend.

41. Foamed products according to claim 40, **characterized in that** said amount of organic peroxides is 0.2 -1.0% wt.


**Patentansprüche**

1. Zusammensetzung eines biologisch abbaubaren aliphatischen und/oder aliphatisch-aromatischen thermoplastischen Polyesters des Dicarbonsäure/Diol-Typs oder mehrerer biologisch abbaubarer aliphatischer und/oder aliphatisch-aromatischer thermoplastischer Polyester des Dicarbonsäure/Diol-Typs, die durch reaktive Extrusion der Polyester mit organischen Peroxiden erhalten werden,
wobei die Zusammensetzung eine Gelfraktion hat, die weniger als 4,5 % (G/G), bezogen auf den Polyester, ist, wobei die Gelfraktion an einer Probe mit etwa 4 g ($X^1$) bestimmt wird, die in einen Behälter mit 200 ml Chloroform gegeben wird, dann für 8 Stunden unter Rückfluss erhitzt wird und mit einem Filtriermittel, das ein 600 mesh-Sieb hat, vakuumfiltriert wird, wobei das auf dem Filtriermittel zurückbleibende Material bei etwa 50°C für 8 Stunden unter reduziertem Druck in einem Ofen getrocknet wird, das Gewicht des erhaltenen Materials ($X^2$) und die Gelfraktion ($X^2$)/($X^1$) ist,
wobei die Ausgangsmonomere auch eine ungesättigte Säure natürlicher oder synthetischer Herkunft oder einen Ester davon in einer Menge im Bereich von 0,1 bis 20 mol%, bezogen auf den Gesamtgehalt an Säuren in der Zusammensetzung, umfassen.

2. Zusammensetzung nach Anspruch 1, wobei die ungesättigte Säure natürlicher oder synthetischer Herkunft oder ein Ester davon in einer Menge im Bereich von 0,2 bis 10 mol%, vorzugsweise 0,3 bis 7 mol%, bezogen auf den Gesamtgehalt an Säuren in der Zusammensetzung, vorliegt.

3. Zusammensetzung nach Anspruch 1 oder 2, **gekennzeichnet durch** eine Gelfraktion von weniger als 3 %.

4. Zusammensetzung nach Anspruch 3, **gekennzeichnet durch** eine Gelfraktion von weniger als 1 %.

5. Zusammensetzung nach Anspruch 1 oder 2, wobei der Polyester durch reaktive Extrusion bei Reaktionstemperaturen von mindestens 20°C höher als die Polyesterschmelztemperatur und so, dass die Halbwertszeiten $T_{dim}$ des Peroxids kleiner als 10 Minuten, vorzugsweise kleiner als 5 Minuten und noch bevorzugter kleiner als 2 Minuten, sind.

6. Zusammensetzung nach Anspruch 1 oder 2, wobei die Dicarbonsäure aus der Gruppe, umfassend Oxalsäure, Malonsäure, Bernsteinsäure, Glutarsäure, Adipinsäure, Pimelinsäure, Suberinsäure, Azelainsäure, Sebacinsäure, Undecandisäure, Dodecandisäure und Brassylsäure, ausgewählt ist.

7. Zusammensetzung nach Anspruch 6, wobei das Diol aus der Gruppe, umfassend 1,2-Ethandiol, 1,2-Propandiol, 1,3-Propandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol, 1,13-Tridecandiol, 1,4-Cyclohexandimethanol, Neopentylglykol, 2-Methyl-1,3-propandiol, Dianhydrosorbitol, Dianhydromannitol, Dianhydroiditol, Cyclohexandiol, Cyclohexanmethandiol, ausgewählt ist.

8. Biologisch abbaubare Zusammensetzung nach einem der vorangehenden Ansprüche, wobei das Ausgangsmonomer außerdem bis zu 50 mol%, bezogen auf die Gesamtmenge an Dicarbonsäure/Diol, einer polyfunktionellen aromatischen Verbindung umfasst.

9. Zusammensetzung nach einem der vorangehenden Ansprüche, die ein polyfunktionelles Molekül oder mehrere polyfunktionelle Moleküle in Mengen im Bereich von 0,1 bis 3 mol%, bezogen auf Dicarbonsäure, umfasst, wobei die Moleküle aus Glycerin, Pentaerythrit, Trimethylpropan, Citronensäure, Densipolsäure, Auripolsäure, epoxidiertem Sojabohnenöl und Rizinusöl ausgewählt sind.

10. Zusammensetzung nach einem der vorangehenden Ansprüche, umfassend wenigstens eine Hydroxysäure in einer Menge im Bereich von 0 bis 49 mol%, vorzugsweise 0 bis 30 mol%, bezogen auf die mol Dicarbonsäure, wobei die Hydroxysäure aus der Gruppe, umfassend Glykolsäure, Hydroxybuttersäure, Hydroxycapronsäure, Hydroxyvaleriansäure, 7-Hydroxyheptansäure, 8-Hydroxycapronsäure, 9-Hydroxynonansäure und Milchsäure, ausgewählt ist.

11. Zusammensetzung nach einem der vorangehenden Ansprüche in einer Mischung mit Polyestern desselben Typs, als Random- oder Blockpolyester, oder mit anderen Polyestern, sogar des Polyhydroxysäuretyps (auch erhalten durch Fermentation) oder mit anderen synthetischen Polymeren als den Polyestern oder mit Polymeren natürlicher Herkunft, ausgewählt aus der Gruppe, umfassend Stärke, Cellulose, Chitosan, Alginate und Naturkautschuk.

12. Zusammensetzung nach dem vorangehenden Anspruch, wobei Stärke und Cellulose modifiziert sind und/oder Stärke in einer destrukturierten oder gelatinierten Form vorliegt.

13. Zusammensetzung nach dem vorangehenden Anspruch, wobei das Mischen mit Stärke in Gegenwart von Wasser, das natürlicherweise in Stärke enthalten ist oder das als Weichmacher der Stärkezusammensetzung zugesetzt wird, stattfindet.

14. Zusammensetzung nach einem der vorangehenden Ansprüche, wobei die organischen Peroxide aus der Gruppe, umfassend Diacylperoxide, Peroxyester, Dialkylperoxide, Hydroxyperoxide, Peroxyketale und Peroxydicarbonate, ausgewählt sind.

15. Zusammensetzung nach Anspruch 14, wobei Diacylperoxide und Dialkylperoxide aus der Gruppe, umfassend Benzoylperoxid, Lauroylperoxid, Isonanoylperoxid, Dicumylperoxid, Di-(tert-butylperoxyisopropyl)benzol, tert-Butylperoxid, 2,5-Dimethyl-2,5-di(tert-butyl)peroxyhexan, ausgewählt sind.

16. Verfahren zur Herstellung einer Zusammensetzung eines biologisch abbaubaren aliphatischen und/oder aliphatisch-aromatischen thermoplastischen Polyesters des Dicarbonsäure/Diol-Typs oder mehrerer biologisch abbaubarer aliphatischer und/oder aliphatisch-aromatischer thermoplastischer Polyester des Dicarbonsäure/Diol-Typs durch reaktive Extrusion der Polyester mit organischen Peroxiden bei Reaktionstemperaturen von wenigstens 20°C über der Schmelztemperatur der Polyester und so, dass die Halbwertszeiten $T_{dim}$ des Peroxids kleiner als 10 Minuten sind, wobei die Zusammensetzung eine Gelfraktion von weniger als 4,5 % G/G hat.

17. Verfahren nach Anspruch 16, wobei die Halbwertszeiten $T_{dim}$ des Peroxids weniger als 5 Minuten, vorzugsweise weniger als 3 Minuten, sind.

18. Verfahren nach Anspruch 16 oder 17, wobei die Zusammensetzung eine Gelfraktion von weniger als 3 %, vorzugsweise weniger als 1 % hat.

19. Verfahren nach Anspruch 16, wobei die Dicarbonsäure aus der Gruppe, umfassend Oxalsäure, Malonsäure, Bernsteinsäure, Glutarsäure, Adipinsäure, Pimelinsäure, Suberinsäure, Azelainsäure, Sebacinsäure, Undecandisäure, Dodecandisäure und Brassylsäure, ausgewählt wird.

20. Verfahren nach Anspruch 16, wobei das Diol aus der Gruppe, umfassend 1,2-Ethandiol, 1,2-Propandiol, 1,3-Propandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol, 1,13-Tridecandiol, 1,4-Cyclohexandimethanol, Neopentylglykol, 2-Methyl-1,3-propandiol, Dianhydrosorbitol, Dianhydromannitol, Dianhydroiditol, Cyclohexandiol, Cyclohexanmethandiol, ausgewählt wird.

21. Verfahren nach Anspruch 16, wobei die Ausgangsmonomere außerdem bis zu 50 mol%, bezogen auf die Gesamtmenge an Dicarbonsäure/Diol, einer polyfunktionellen aromatischen Verbindung umfassen.

22. Verfahren nach Anspruch 16, umfassend ein polyfunktionelles Molekül oder mehrere polyfunktionelle Moleküle in Mengen im Bereich von 0,3 bis 3 mol%, bezogen auf die Dicarbonsäure, wobei die Moleküle aus Glycerin, Pentaerythrit, Trimethylolpropan, Citronensäure, Densipolsäure, Auripolsäure, expoxidiertem Sojabohnenöl und Castoröl, ausgewählt werden.

23. Verfahren nach Anspruch 16, umfassend wenigstens eine Hydroxysäure in einer Menge im Bereich von 0 bis 49 mol%, vorzugsweise 0 bis 30 mol%, bezogen auf die mol an Dicarbonsäure, wobei die Hydroxysäure aus der Gruppe, umfassend Glykolsäure, Hydroxybuttersäure, Hydroxycapronsäure, Hydroxyvaleriansäure, 7-Hydroxyheptansäure, 8-Hydroxycapronsäure, 9-Hydroxynonansäure und Milchsäure, ausgewählt wird.

24. Verfahren nach Anspruch 16, wobei die Zusammensetzung eine Mischung mit Polyestern desselben Typs, Random- oder Blockpolyestern, oder mit anderen Polyestern, selbst des Polyhydroxysäuretyps (auch erhalten durch Fermentation) oder mit anderen synthetischen Polymeren als Polyestern oder mit Polymeren natürlicher Herkunft, ausgewählt aus der Gruppe, umfassend Stärke, Cellulose, Chitosan, Alginate und Naturkautschuk, ist.

25. Verfahren nach Anspruch 24, wobei Stärke und Cellulose modifiziert sind und/oder Stärke in destrukturierter oder gelatinierter Form vorliegt.

26. Verfahren nach dem vorangehenden Anspruch, wobei ein Mischen mit Stärke in Gegenwart von Wasser, das natürlicherweise in Stärke enthalten ist oder das als Weichmacher der Stärkezusammensetzung zugesetzt ist, stattfindet.

27. Verfahren nach Anspruch 16, wobei die organischen Peroxide aus der Gruppe, umfassend Diacylperoxide, Peroxyester, Dialkylperoxide, Hydroxyperoxide, Peroxyketale und Peroxydicarbonate, ausgewählt werden.

28. Verfahren nach Anspruch 27, wobei Diacylperoxide und Dialkylperoxide aus der Gruppe, umfassend Benzoylperoxid, Lauroylperoxid, Isonanoylperoxid, Dicumylperoxid, Di(tert-butylperoxyisopropyl)benzol, tert-Butylperoxid, 2,5-Dimethyl-2,5-di(tert-butyl)peroxyhexan, ausgewählt werden.

29. Verwendung der Zusammensetzung eines biologisch abbaubaren aliphatischen und/oder aliphatisch-aromatischen thermoplastischen Polyesters oder mehrerer biologisch abbaubarer aliphatischer und/oder aliphatisch-aromatischer thermoplastischer Polyester nach einem der vorangehenden Ansprüche für die Herstellung von:

    - Filmen, entweder mono- oder bidirektionalen, und mehrschichtigen Filmen mit anderen Materialien;
    - Filmen für die Landwirtschaft, z.B. Mulchfilme;
    - Beutel und Aufkleber für die Sammlung von organischem Abfall;
    - ein- oder mehrschichtiger Lebensmittelverpackung, z.B. Behälter für Milch, Joghurt, Fleisch, Getränke usw.;
    - Beschichtungen, erhalten mit der Extrusionsbeschichtungstechnik;
    - Mehrschichtlaminaten mit Schichten aus Papier, Kunststoffen, Aluminium, metallisierten Filmen;
    - geschäumten bzw. expandierten und halbgeschäumten bzw. halbexpandierten Produkten, einschließlich geschäumter Blöcke aus vorgeschäumten Partikeln;
    - geschäumten Folien, thermogeformten Folien und daraus erhaltenen Behältern zur Lebensmittelverpackung;
    - Behälter im Allgemeinen für Früchte und Gemüse;
    - Verbundstoffe mit gelatinierter, destrukturierter und/oder komplexierter Stärke oder natürlicher Stärke zur Verwendung als Füllstoff;
    - Fasern, Geweben und Vliesgeweben für den Gesundheits- und Hygienesektor.

**30.** Geformte Artikel, erhältlich aus den Zusammensetzungen nach einem der vorangehenden Ansprüche.

**31.** Geformte Artikel nach Anspruch 30, wobei die Artikel aus monodirektionalen Filmen, bidirektionalen Filmen, Mehrschichtfilmen mit anderen Polymermaterialien, Mulchfilmen, Beschichtungen, erhalten mit der Extrusionsbeschichtungstechnik, ausgewählt sind.

**32.** Geformte Artikel nach Anspruch 30, wobei die Artikel aus Beuteln und Aufklebern für die Sammlung von organischem Abfall ausgewählt sind.

**33.** Geformte Artikel nach Anspruch 30, wobei die Artikel einschichtige oder mehrschichtige Lebensmittelbehälter, ausgewählt aus Milchbehältern, Joghurtbehältern, Fleischbehältern, Getränkebehältern, Früchtebehältern, Gemüsebehältern, sind.

**34.** Geformte Artikel nach Anspruch 30, wobei die Artikel Mehrschichtlaminate sind, die eine Materialschicht, ausgewählt aus Papier, Kunststoffen, Aluminium, metallisiertem Film, umfassen.

**35.** Geformte Artikel nach Anspruch 30, wobei die Artikel aus geschäumten Produkten bzw. expandierten Produkten, halbgeschäumten Produkten bzw. halbexpandierten Produkten, geschäumten bzw. expandierten Blöcken oder ausexpandierten bzw. vorgeschäumten Partikeln, geschäumten Folien, thermogeformten Folien, Behälter zur Lebensmittelverpackung, hergestellt aus geschäumten oder thermogeformten Folien, ausgewählt sind.

**36.** Geformte Artikel nach Anspruch 30, wobei die Artikel aus Verbundstoffen mit gelatinierter, destrukturierter und/oder komplexierter Stärke oder natürlicher Stärke als Füllstoff ausgewählt sind.

**37.** Geformte Artikel nach Anspruch 30, wobei die Artikel aus Fasern, Geweben, Vliesgeweben für den Gesundheits- oder Hygienesektor ausgewählt sind.

**38.** Filme oder Folien, die aus der Zusammensetzung nach Anspruch 1 oder der nach Anspruch 16 erhaltenen Zusammensetzung erhalten werden, **dadurch gekennzeichnet, dass** die organischen Peroxide der reaktiven Extrusion in einer Menge von 0,02 bis 0,7 Gew.%, bezogen auf die Menge an Polyester oder Polymermischung, zugegeben wurden.

**39.** Filme oder Folien nach Anspruch 38, **dadurch gekennzeichnet, dass** die Menge an organischen Peroxiden 0,03 bis 0,5 Gew.% ist.

**40.** Geschäumte Produkte, erhalten aus der Zusammensetzung nach Anspruch 1 oder der Zusammensetzung, erhalten gemäß Anspruch 16, **dadurch gekennzeichnet, dass** die organischen Peroxide in einer Menge von 0,1 bis 1,5 Gew.%, bezogen auf die Menge an Polyester oder Polymermischung, zu der reaktiven Extrusion gegeben werden.

**41.** Geschäumte Produkte nach Anspruch 40, **dadurch gekennzeichnet, dass** die Menge an organischen Peroxiden 0,2 bis 1,0 Gew.% ist.


**Revendications**

**1.** Composition d'un ou de plusieurs polyesters thermoplastiques biodégradables aliphatiques et / ou aliphatiques-aromatiques du type acide dicarboxylique / diol, obtenus par extrusion réactive des polyesters avec des peroxydes organiques, ladite composition ayant une fraction de gel inférieure à 4,5 % (p/p) par rapport au polyester, ladite fraction de gel étant déterminée sur un échantillon d'environ 4 g ($X^1$) placé dans un récipient avec 200 ml de chloroforme, puis chauffée à reflux pendant 8 h et filtrée sous vide avec des moyens de filtration ayant un tamis à maille 600, le matériau restant sur les moyens de filtration étant séché au four à environ 50°C pendant 8 h sous pression réduite, le poids du matériau obtenu étant ($X^2$) et la fraction de gel étant ($X^2$) / ($X^1$), dans laquelle les monomères de départ comprennent également un acide insaturé d'origine naturelle ou synthétique, ou un ester de celui-ci, en une quantité allant de 0,1 à 20 % en moles par rapport à la teneur totale des acides dans la composition.

**2.** Composition selon la revendication 1, dans laquelle ledit acide insaturé d'origine naturelle ou synthétique, ou un ester de celui-ci, est présent en une quantité allant de 0,2 à 10 %, de préférence de 0,3 à 7 % en moles par rapport à la teneur totale des acides dans la composition.

**3.** Composition selon la revendication 1 ou 2, **caractérisée par** une fraction de gel inférieure à 3 %.

**4.** Composition selon la revendication 3, **caractérisée par** une fraction de gel inférieure à 1 %.

**5.** Composition selon la revendication 1 ou 2, dans laquelle le polyester est obtenu par extrusion réactive à des températures de réaction d'au moins 20 °C supérieures à la température de fusion du polyester et de sorte que les demi-vies $T_{dim}$ du peroxyde soient inférieures à 10 min, de manière préférée, inférieures à 5 min et de manière encore plus préférée, inférieures à 3 min.

**6.** Composition selon la revendication 1 ou 2, dans laquelle l'acide dicarboxylique est choisi dans le groupe comprenant l'acide oxalique, l'acide malonique, l'acide succinique, l'acide glutarique, l'acide adipique, l'acide pimélique, l'acide subérique, l'acide azélaïque, l'acide sébacique, l'acide undécanedioïque, l'acide dodécanedioïque et l'acide brassylique.

**7.** Composition selon la revendication 6, dans laquelle le diol est choisi dans le groupe comprenant le 1,2-éthanediol, le 1,2-propanediol, le 1,3-propanediol, le 1,4-butanediol, le 1,5-pentanediol, le 1,6-hexanediol, le 1,7-heptanediol, le 1,8-octanediol, le 1,9-nonanediol, le 1,10-décanediol, le 1,11-undécanediol, le 1,12-dodécanediol, le 1,13-tridécanediol, le 1,4-cyclohexanediméthanol, le néopentylglycol, le 2-méthyl-1,3-propanediol, le dianhydrosorbitol, le dianhydromannitol, le dianhydroiditol, le cyclohexanediol, le cyclohexaneméthanediol.

**8.** Composition biodégradable selon l'une quelconque des revendications précédentes dans laquelle le monomère de départ comprend en outre jusqu'à 50 % en moles, par rapport à la quantité totale d'acide dicarboxylique / diol, d'un composé aromatique polyfonctionnel.

**9.** Composition selon l'une quelconque des revendications précédentes comprenant une ou plusieurs molécules polyfonctionnelles en quantités allant de 0,1 à 3 % en moles par rapport à l'acide dicarboxylique, lesdites molécules étant choisies parmi le glycérol, le pentaérythritol, le triméthylolpropane, l'acide citrique, l'acide densipolique, l'acide auripolique, l'huile de soja époxydée et l'huile de ricin.

**10.** Composition selon l'une quelconque des revendications précédentes comprenant au moins un acide hydroxylé en une quantité allant de 0 à 49 %, de manière préférée, de 0 à 30 % en moles par rapport aux moles d'acide dicarboxylique, ledit acide hydroxylé étant choisi dans le groupe comprenant l'acide glycolique, l'acide hydroxybutyrique, l'acide hydroxycaproïque, l'acide hydroxyvalérique, l'acide 7-hydroxyheptanoïque, l'acide 8-hydroxycaproïque, l'acide 9-hydroxynonanoïque et l'acide lactique.

**11.** Composition selon l'une quelconque des revendications précédentes en mélange avec des polyesters du même type, aléatoires ou bloc, ou avec d'autres polyesters, même du type acides polyhydroxyacides (également obtenus par fermentation), ou avec des polymères synthétiques autres que les polyesters, ou avec des polymères d'origine naturelle choisis dans le groupe comprenant l'amidon, la cellulose, le chitosane, les alginates et le caoutchouc naturel.

**12.** Composition selon la revendication précédente, dans laquelle l'amidon et la cellulose sont modifiés et / ou l'amidon est présent sous une forme déstructurée ou gélatinisée.

**13.** Composition selon la revendication précédente, dans laquelle le mélange avec l'amidon a lieu en présence d'eau, contenue de manière naturelle dans l'amidon ou ajoutée en tant qu'agent plastifiant de la composition d'amidon.

**14.** Composition selon l'une quelconque des revendications précédentes, dans laquelle les peroxydes organiques sont choisis dans le groupe comprenant les diacyl peroxydes, les peroxy esters, les dialkyl peroxydes, les hydroxyperoxydes, les peroxy cétals et les peroxy dicarbonates.

**15.** Composition selon la revendication 14, dans laquelle les diacyl peroxydes et les dialkyl peroxydes sont choisis dans le groupe comprenant le peroxyde de benzoyle, le peroxyde de lauroyle, le peroxyde d'isonanoyle, le peroxyde de dicumyle, le di-(tert-butylperoxyisopropyl)benzène, le tert-butylperoxyde, le 2,5-diméthyl-2,5-di(tert-butyl)peroxyhexane.

**16.** Procédé de production d'une composition d'un ou de plusieurs polyesters thermoplastiques biodégradables aliphatiques et / ou aliphatiques - aromatiques du type acide dicarboxylique / diol, obtenus par extrusion réactive des polyesters avec des peroxydes organiques à des températures de réaction supérieures d'au moins 20 °C à la température de fusion des polyesters, et de sorte que les demi-vies $T_{dim}$ du peroxyde soient inférieures à 10 min, dans lequel ladite composition a une fraction de gel inférieure à 4,5 % p/p.

17. Procédé selon la revendication 16, dans lequel lesdites demi-vies $T_{dim}$ du peroxyde sont inférieures à 5 min, de manière préférée, inférieures à 3 min.

18. Procédé selon la revendication 16 ou 17, dans lequel ladite composition a une fraction de gel inférieure à 3 %, de manière préférée inférieure à 1 %.

19. Procédé selon la revendication 16, dans lequel l'acide dicarboxylique est choisi dans le groupe comprenant l'acide oxalique, l'acide malonique, l'acide succinique, l'acide glutarique, l'acide adipique, l'acide pimélique, l'acide subérique, l'acide azélaïque, l'acide sébacique, l'acide undécanedioïque, l'acide dodécanedioïque et l'acide brassylique.

20. Procédé selon la revendication 16, dans lequel le diol est choisi dans le groupe comprenant le 1,2-éthanediol, le 1,2-propanediol, le 1,3-propanediol, le 1,4-butanediol, le 1,5-pentanediol, le 1,6-hexanediol, le 1,7-heptanediol, le 1,8-octanediol, le 1,9-nonanediol, le 1,10-décanediol, le 1,11-undécanediol, le 1,12-dodécanediol, le 1,13-tridécanediol, le 1,4-cyclohexanediméthanol, le néopentylglycol, le 2-méthyl-1,3-propanediol, le dianhydrosorbitol, le dianhydromannitol, le dianhydroiditol, le cyclohexanediol, le cyclohexaneméthanediol.

21. Procédé selon la revendication 16, dans lequel les monomères de départ comprennent en outre jusqu'à 50 % en moles, par rapport à la quantité totale d'acide dicarboxylique / diol, d'un composé aromatique polyfonctionnel.

22. Procédé selon la revendication 16, comprenant une ou plusieurs molécules polyfonctionnelles en quantités allant de 0,1 à 3 % en moles par rapport à l'acide dicarboxylique, lesdites molécules étant choisies parmi le glycérol, le pentaérythritol, le triméthylolpropane, l'acide citrique, l'acide densipolique, l'acide auripolique, l'huile de soja époxydée et l'huile de ricin.

23. Procédé selon la revendication 16, comprenant au moins un acide hydroxylé en une quantité allant de 0 à 49 %, de manière préférée, de 0 à 30 % en moles par rapport aux moles d'acide dicarboxylique, ledit acide hydroxylé étant choisi dans le groupe comprenant l'acide glycolique, l'acide hydroxybutyrique, l'acide hydroxycaproïque, l'acide hydroxyvalérique, l'acide 7-hydroxyheptanoïque, l'acide 8-hydroxycaproïque, l'acide 9-hydroxynonanoïque et l'acide lactique.

24. Procédé selon la revendication 16, dans lequel ladite composition est en mélange avec des polyesters du même type, aléatoires ou bloc, ou avec d'autres polyesters, même du type acides polyhydroxyacides (également obtenus par fermentation), ou avec des polymères synthétiques autres que les polyesters, ou avec des polymères d'origine naturelle choisie dans le groupe comprenant l'amidon, la cellulose, le chitosane, les alginates et le caoutchouc naturel.

25. Procédé selon la revendication 24, dans lequel l'amidon et la cellulose sont modifiés et / ou l'amidon est présent sous une forme déstructurée ou gélatinisée.

26. Procédé selon la revendication précédente, dans lequel le mélange avec l'amidon a lieu en présence d'eau, contenue de manière naturelle dans l'amidon ou ajoutée en tant qu'agent plastifiant de la composition d'amidon.

27. Procédé selon la revendication 16, dans lequel les peroxydes organiques sont choisis dans le groupe comprenant les diacyl peroxydes, les peroxy esters, les dialkyl peroxydes, les hydroxyperoxydes, les peroxy cétals et les peroxy dicarbonates.

28. Procédé selon la revendication 27, dans lequel les diacyl peroxydes et les dialkyl peroxydes sont choisis dans le groupe comprenant le peroxyde de benzoyle, le peroxyde de lauroyle, le peroxyde d'isonanoyle, le peroxyde de dicumyle, le di-(tert-butylperoxyisopropyl)benzène, le tert-butylperoxyde, le 2,5-diméthyl-2,5-di(tert-butyl)peroxyhexane.

29. Utilisation d'une composition d'un ou de plusieurs polyesters thermoplastiques biodégradables aliphatiques et / ou aliphatiques - aromatiques du type acide dicarboxylique / diol, selon l'une quelconque des revendications précédentes pour la production de :

   - films, soit mono- soit bidirectionnels, et de films multicouches avec d'autres matériaux polymères ;

- films pour l'agriculture tels que des films de paillis ;
- sacs et des emballages pour la collecte de déchet organique ;
- emballages alimentaires mono ou multicouches, tels que des récipients pour du lait, du yaourt, de la viande, des boissons, etc ;
- revêtements obtenus par la technique de revêtement par extrusion ;
- laminés multicouches avec des couches de papier, de plastique, d'aluminium, de films métallisés ;
- produits expansés ou semi expansés, y compris des blocs expansés à partir de particules pré expansées ;
- feuilles expansées, feuilles thermoformées et récipients obtenus à partir de celles-ci pour emballage alimentaire ;
- récipients en général pour des fruits et des légumes ;
- composites avec de l'amidon gélatinisé, déstructuré et / ou de l'amidon complexé ou de l'amidon naturel utile en tant que charge ;
- fibres, tissus et tissus non-tissés pour le secteur sanitaire et de l'hygiène.

**30.** Articles mis en forme susceptibles d'être obtenus à partir de compositions selon l'une quelconque des revendications précédentes.

**31.** Articles mis en forme selon la revendication 30, dans lesquels lesdits articles sont choisis parmi les films monodirectionnels, les films bidirectionnels, les films multicouches avec d'autres matériaux polymères, les films de taillis, les revêtements obtenus à partir de la technique de revêtement extrusion.

**32.** Articles mis en forme selon la revendication 30, dans lesquels lesdits articles sont choisis parmi les sacs ou les emballages pour la collecte de déchet organique.

**33.** Articles mis en forme selon la revendication 30, dans lesquels lesdits articles sont des récipients alimentaires mono ou multicouches choisis parmi les récipients pour le lait, les récipients pour le yaourt, les récipients pour la viande, les récipients pour les boissons, les récipients pour les fruits, les récipients pour les légumes.

**34.** Articles mis en forme selon la revendication 30, dans lesquels lesdits articles sont des laminés multicouches comprenant une couche d'un matériau choisi parmi le papier, le plastique, l'aluminium, un film métallisé.

**35.** Articles mis en forme selon la revendication 30, dans lesquels lesdits articles sont choisis parmi les produits expansés, les produits semi expansés, les blocs expansés à partir de particules pré expansées, les feuilles expansées, les feuilles thermoformées, les récipients pour emballage alimentaire réalisés à partir de feuilles expansées ou de feuilles thermoformées.

**36.** Articles mis en forme selon la revendication 30, dans lesquels lesdits articles sont choisis parmi les composites avec de l'amidon gélatinisé, déstructuré et / ou complexé ou de l'amidon naturel en tant que charge.

**37.** Articles mis en forme selon la revendication 30, dans lesquels lesdits articles sont choisis parmi les fibres, les tissus, les tissus non-tissés pour le secteur sanitaire et de l'hygiène.

**38.** Films ou feuilles obtenus à partir d'une composition selon la revendication 1 ou à partir de la composition obtenue selon la revendication 16, **caractérisés en ce que** lesdits peroxydes organiques sont ajoutés à l'extrusion réactive en une quantité de 0,02 à 0,7 % en poids par rapport à la quantité de polyester ou de mélange de polyester.

**39.** Films ou feuilles selon la revendication 38, **caractérisés en ce que** ladite quantité de peroxydes organiques est de 0,03 à 0,5 % en poids.

**40.** Produits sous forme de mousse obtenus à partir de la composition selon la revendication 1 ou à partir de la composition obtenue selon la revendication 16, **caractérisés en ce que** lesdits peroxydes organiques sont ajoutés à l'extrusion réactive en une quantité de 0,1 à 1,5 % en poids par rapport à la quantité de polyester ou de mélange de polyester.

**41.** Produits sous forme de mousse selon la revendication 40, **caractérisés en ce que** ladite quantité de peroxydes organiques est de 0,2 à 1,0 % en poids.